Europäisches Patentamt

European Patent Office

Office européen des brevets

(19)

(11) Veröffentlichungsnummer: **0 209 764 B1**

# (12) EUROPÄISCHE PATENTSCHRIFT

(45) Veröffentlichungstag der Patentschrift: 06.11.91

(21) Anmeldenummer: 86108927.4

(22) Anmeldetag: 01.07.86

Die Akte enthält technische Angaben, die nach dem Eingang der Anmeldung eingereicht wurden und die nicht in dieser Patentschrift enthalten sind.

(51) Int. Cl.5: **G01N 1/32**, B24B 37/04, G01N 1/28

(54) Verfahren und Vorrichtung zur Herstellung von für die mikroskopische Untersuchung im Durchlicht geeigneten Dünnschliffen aus Proben mit harten Bestandteilen.

(30) Priorität: 22.07.85 DE 3526127
02.12.85 DE 3542508

(43) Veröffentlichungstag der Anmeldung:
28.01.87 Patentblatt 87/05

(45) Bekanntmachung des Hinweises auf die Patenterteilung:
06.11.91 Patentblatt 91/45

(84) Benannte Vertragsstaaten:
AT CH GB LI SE

(56) Entgegenhaltungen:
CH-A- 629 992
DE-B- 1 238 803
FR-A- 1 224 972
GB-A- 790 144
US-A- 3 762 103

REVIEW OF SCIENTIFIC INSTRUMENTS, Band 49, Nr. 1, Januar 1978, Seiten 83-85, American Institute of Physics; J.D. HONG et al.: "Precision grinding device for radioactive tracer diffusion studies in very hard ceramic materials"

(73) Patentinhaber: Biermann, Alfred
Heckkoppel 7
W-2000 Hamburg 65(DE)

Patentinhaber: Herrmann, Jörg
Am Hünengrab 33
W-2056 Glinde(DE)

(72) Erfinder: Biermann, Alfred
Heckkoppel 7
W-2000 Hamburg 65(DE)
Erfinder: Herrmann, Jörg
Am Hünengrab 33
W-2056 Glinde(DE)

(74) Vertreter: Walenda, Hans, Dipl.Ing. Dr. techn.
Berner Weg 28
W-2000 Hamburg 65(DE)

## Beschreibung

Die Erfindung betrifft ein Verfahren zu Herstellung von Dünnschliffen mit einer zum Objektträger genau parallelen Oberfläche und einer ebenfalls sehr genau einstellbaren Dicke von wenigen μm, z.B. 50 bis 200 μm dicken Dünnschnitten von Proben mit Regionen verschiedener Festigkeit und/oder Härte wie z.B. Metall- oder Keramik-Implantaten, Zähnen mit Kronen oder Plomben u. dgl. sowie eine Vorrichtung zu dessen Durchführung.

Eine Schleifvorrichtung für die Herstellung von Schliffen mit genau planparallelen Ober- und Unterflächen aus harten Substanzen mittels einer um eine vertikale Achse rotierenden Schleifscheibe ist z.B. bekannt durch die CH-A- 629 992. Diese beschreibt eine Schleifvorrichtung für die Herstellung dünner Blättchen beispielsweise für mineralogische Präparate zur Mikroskopie oder für die flachen Gehäuse piezoelektrischer Resonatoren aus Keramik oder deren Deckel aus Glas mit absolut parallelen Ober- und Unterflächen. Die Dicke des hergestellten Feinschliffes wird hier durch Auflagen entsprechender Dicke aus extrem hartem Material auf den gewünschten Wert eingestellt, welche sich auf der Schleifscheibe abstützen, sobald dieser Wert erreicht ist.

Diese bekannte Vorrichtung gibt zwar ganz zufriedenstellende Resultate bei der Bearbeitung von Materialien gleichmäßiger Härte und Festigkeit, obwohl die Notwendigkeit der Verwendung von Hartmaterialauflagen gewisse Nachteile mit sich bringt, wie nachstehend näher ausgeführt, nicht aber bei der Bearbeitung von Proben mit Regionen unterschiedlicher Härte und/oder Festigkeit.

Während die Herstellung von für die mikroskopische Untersuchung im Durchlicht geeigneten Dünnschnitten mit zum Objektträger genau paralleler Oberfläche mit Dicken von 5 bis 15 μm aus weichen Materialien mit dem altbekannten Mikrotom problemlos möglich ist, bereitet die Herstellung solcher Dünnschnitte aus harten Materialien und ganz besonders aus Proben, die Materialien verschiedener Festigkeit und Härte enthalten, wesentlich größere Schwierigkeiten.

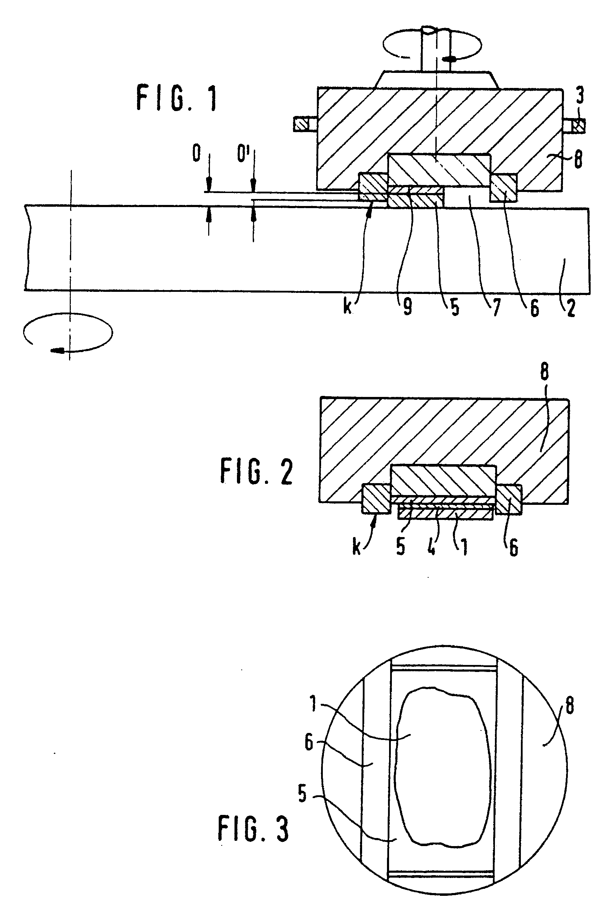

Das beste bis heute bekannte Verfahren besteht im Wesentlichen darin, die in Kunststoff eingebettete Probe auf einem Objektträger aufzukleben und in einer ersten Verfahrensstufe durch einen parallel zum Objektträger geführten Sägeschnitt, üblicherweise mit einer Bandsäge, einen Dünnschnitt von etwa 50 bis 200 μm Dicke als Vorprodukt herzustellen und dieses anschließend unter gleichzeitiger Kühlung und Spülung mit Wasser unter mäßigem Schleifdruck auf die gewünschte Dicke von üblicherweise 5 bis 15 μm herunterzuschleifen. Dieses Schleifverfahren und die zu seiner Durchführung verwendete Vorrichtung sind nachstehend an Hand der Figuren 1 bis 3 schematisch und beispielsweise näher erläutert.

Obwohl dieses Verfahren und die zu seiner Durchführung verwendeten Vorrichtung unbestreitbar die besten bisher bekannten sind, sind sie doch in mehrfacher Hinsicht noch verbesserungsfähig, da ihnen noch mehrere Nachteile anhaften.

1) Da es unmöglich ist, während des Schleifens festzustellen, ob die Probe bereits bis auf die gewünschte Enddicke abgeschliffen ist, muß der Schleifvorgang zwecks Durchführung dieser Kontrolle besonders gegen Ende der Operation öfter unterbrochen werden, was arbeits- und zeitaufwendig ist.

2) Zu Beginn des Schleifvorganges steht die Probe über die Unterkante der Hartmatrialleisten vor, wodurch der ganze Aufnahmeblock mit Objektträger und Probe "kippelt". Die Hartmaterialleisten liegen dann mit ihren Kanten auf dem Schleifpapier auf, das also gleich zu Beginn des Schleifvorganges abstumpft. Außerdem werden die Hartmaterialkanten selbst auch abgeschliffen, so daß ihre Unterfläche bald uneben und ballig wird, was ungleichmäßige Dicke der fertig geschliffenen Probe zur Folge hat.

3) Die unentbehrlichen Hartmaterialleisten schirmen das Kühl- und Spülwasser seitlich ab, so daß dieses nicht von allen Seiten freien Zugang zur Probe hat, die dadurch leicht überhitzt und damit geschädigt werden kann.

4) Außerdem nützen die in der Endphase des Schleifvorganges unmittelbar auf dem Schleifpapier aufliegenden Hartmaterialleisten das Schleifpapier rasch ab, weshalb häufiges Wechseln desselben erforderlich wird.

5) Das als Schleifmaterial unentbehrliche Schleifpapier neigt, vor allem bei Proben, die Substanzen verschiedener Härte und/oder Dichte enthalten, dazu, sich vor Zonen höherer Härte bzw. Dichte aufzustauen, wodurch dort Vertiefungen entstehen, die die vollkommene Ebenheit der Schleiffläche beeinträchtigen.

6) Der wirksame Schleifdruck entspricht dem Quotienten aus der Anpreßkraft und der Größe der zu schleifenden Fläche. Während letztere naturgemäß von Probe zu Probe verschieden ist, ist die Anpreßkraft, die sich als Summe der Andruckkraft des Halters und der Summe der Gewichte von Halteblock, Objektträger und Probe ergibt, praktisch vorgegeben und kaum manipulierbar. Deshalb ist eine optimale Anpassung des wirksamen Schleifdruckes an die jeweilige Probengröße und -beschaffenheit nicht möglich. Die üblicherweise verwendeten Halteblöcke mit Gewichten von einigen N bis zu etwa 10 N ergeben bei den üblichen Probeflächen von 1 bis 5 cm² einen Schleifdruck 50 000 bis 10 000 Pa (500 bis 100 p/cm²) Wesentlich niedrigere Schleifdrücke, insbesondere solche von weniger als 2 000 Pa (20 p/cm²), wie sie oft wünschenswert wären, sind bis heute nicht möglich.

Die Hauptaufgabe, die sich die Erfindung gestellt hat, besteht darin, beim Abschleifen des auf einem Objektträger geklebten in Kunststoff eingebetteten Dünnschnittes des Probematerials mittels einer unter dem in einem Aufnahmeblock befindlichen Objektträger rotierenden Schleifscheibe die bisher unentbehrlichen Hartmetalleisten entbehrlich zu machen und damit nicht nur alle voranstehend unter 1) bis 4) aufgezählten Nachteile des Standes der Technik zu überwinden, sondern darüber hinaus auch die Überwindung des unter 5) aufgezählten weiteren Nachteiles ohne wesentlichen zusätzlichen Aufwand zu ermöglichen. Bevorzugte Ausführungsformen des Hauptgedankens der Erindung erbringen zusätzlich weitere technische Vorteile, die nachstehend im einzelnen näher erläutert sind.

Die Lösung der Hauptaufgabe der Erfindung, nämlich die Hartmaterialleisten entbehrlich zu machen, wird durch die Anwendung der folgenden Maßnahmen erzielt.

Das aus Substanzen mit harten Einlagen in einer weicheren Matrix wie Metall- oder Keramikimplantaten bestehende Ausgangsmaterial wird in an sich bekannter Weise in Kunststoff eingebettet, auf einen Objektträger aufgeklebt und dieser auf einem Aufnahmeblock oberhalb einer rotierenden Schleifscheibe aufgehängt, die mit Zu- und Abfuhrmöglichkeiten für eine Kühl- und Spülflüssikeit wie Wasser ausgerüstet ist. wie es aus dem Journal of Pathology 1982(11) 318-326 "A method for the study of undecalcified bones and teeth with attached soft tissue", zu erkennen ist.

Erfindungsgemäß wird der den Objektträger mit der Probe tragende Aufnahmeblock an einem Hubschlitten befestigt, der während des Schleifvorganges an senkrechten Führungsschienen zwangsgeführt unter dem Einfluß der Schwerkraft abwärts gleiten gelassen wird. Dieser Hubschlitten ist mit einem Meßgerät verbunden, das den Vertikalabstand eines mit seinem Fühler fest verbundenen Punktes von einem oberhalb der Schleifscheibe (2) angeordneten Meßpunkt (34) mißt und beim Erreichen eines bestimmten, einstellbaren Wertes dieses Abstandes entweder den Antrieb der Schleifscheibe abstellt und/oder die weitere Abwärtsbewegung des Hubschlittens blockiert.

Durch den so ermöglichten Fortfall der Hartmaterialleisten sind alle unter 1) bis 4) aufgezählten Nachteile des bekannten Standes der Technik aus der Welt geschaffen. Das Gleiche gilt für den unter 5) aufgezählten Nachteil, weil wegen des Fortfalles der Hartmaterialleisten an Stelle des Schleifpapiers eine harte Schleifscheibe, z.B. eine Diamantscheibe verwendet werden kann.

Eine bevorzugte Ausführungsform der zweiten obgenannten Maßnahme besteht darin, mit dem Aufnahmekopf der Meß- und Steuereinrichtung eine Mikrometerschraube zu verbinden, deren Spindelende auf eine innerhalb gewisser Grenzen einstellbare Höhe über einem unter dem Aufnahmekopf und oberhalb der Schleifscheibe in konstanter Höhe angebrachten Anschlag eingestellt werden kann. Berührung dieses Anschlages durch das Spindelende kann die weitere Abwärtsbewegung des Aufnahmekopfes z.B. rein mechanisch abstoppen, kann aber auch einen Schalter betätigen, der eine Sperrung dieser Abwärtsbewegung bewirkt und/oder den Antrieb der Schleifscheibe abstellt.

Eine weitere bevorzugte Ausgestaltung der Erfindung, welche auch die unter 5) aufgeführten Nachteile des Standes der Technik überwindet, besteht im Wesentlichen darin, das Eigengewicht des den Aufnahmeblock mit dem Objektträger tragenden Hubschlittens einschließlich aller mit ihm verbundenen Zusatzeinrichtungen mindestens teilweise und vorzugsweise genau durch ein oder mehrere Gegengewichte zu kompensieren und den wirksamen Schleifdruck durch geeignet ausgewählte kleinere Zusatzgewichte auf den jeweils gewünschten Wert genau einzustellen. Dadurch ist es möglich, auch sehr kleine Schleifdrücke von z.B. 2000 Pa(20 p/cm²) und weniger sehr genau einzuhalten.

Gemäß einer weiteren Ausgestaltung der Erfindung wird der den Objektträger mit der Probe tragende Aufnahmeblock, zweckmäßig zusammen mit dem ihn tragenden Hubschlitten, während des Schleifvorganges von einem an horizontalen Achsen geführten Führungsschlitten über die Oberfläche der Schleifscheibe oszillierend hin und her gezogen, ohne jedoch jemals den Rand der Schleifscheibe zu überschreiten. Durch diese Maßnahme wird der Einfluß der stets vorhandenen Ungleichmäßigkeiten der Schleifmittelfläche auf die Oberfläche des erzeugten Schliffes ausgeglichen.

Noch eine bevorzugte Ausführungsform der Erfindung sieht vor, die Aufnahmefläche für den Objektträger an eine oder mehrere Vakuumleitungen anzuschließen, durch die er unabhängig von Paßform und ohne Inanspruchnahme von Adhäsionskraft verläßlich an Ort und Stelle festgehalten wird. Dadurch wird nicht nur das Verkanten und Wackeln des Objektträgers während des Schleifens viel sicherer vermieden als nach dem Stand der Technik, sondern es wird auch eine weitere Ausgestaltung der Erfindung sehr erleichtert und überhaupt erst praktisch durchführbar gemacht, durch welche die Qualität der erzeugten Dünnschliffe dadurch noch weiter gesteigert wird, daß die stets im Bereich von wenigen μ verbleibenden Resttoleranzen, wie sie z.B. durch unvermeidliche Fabrikationsungenauigkeiten und durch die Durchbiegung von mehrere dm langen Achsen und Wellen unter dem Einfluß der Schwerkraft verursacht werden, durch eine besondere Verfahrensmaßnahme restlos ausgeglichen werden.

Diese besondere Verfahrensmaßnahme wird dadurch ermöglicht, daß gemäß der letztgenannten Ausführungsform der Erfindung die Vorrichtung keine für die Aufnahme des Objektträgers bestimmte Nut benötigt, da der Objektträger nur einfach auf die glatte Unterseite des von Vakuumleitungen durchzogenen Aufnahmeblocks gelegt zu werden braucht.

Wird nun die Unterseite des Aufnahmeblocks vor seiner ersten Inbetriebnahme auf der erfindungsgemäßen Schleifvorrichtung abgeschliffen, für die er bestimmt ist, dann werden dieser alle durch die verschiedenen unvermeidlichen kleinen Ungenauigkeiten dieser Schleifvorrichtung verursachten Abweichungen von der idealen Ebene, die später beim Abschleifen der Probe auftreten, aufgeprägt. Diese Operation wird zweckmäßig das erstemal vom Hersteller selbst ausgeführt, kann aber auch vom Anwender selbst durchgeführt werden, wenn sie , etwa durch Beschädigungen oder Anderungen, etwa infolge Austausches von Ersatzteilen erneut notwendig werden sollte. Wird auf den so vorbehandelten Aufnahmekopf ein Objektträger mit einer aufgeklebten Probe aufgebracht und unter den gleichen Bedingungen geschliffen, dann wird die fertige Schliffoberfläche der Probe genau kongruent zur Oberfläche des Aufnahmekopfes werden, weil sie genau die gleichen kleinen Abweichungen von der Idealebene haben wird wie diese. Das gleiche gilt selbstverständlich auch dür die Unterseite des Objektträgers, wenigstens wenn seine Oberseite genau planparallel ist zu seiner Unterseite, was bei guten Objektträgern meist vorausgesetzt werden kann. Da der Objektträger stets eine gewisse Biegsamkeit aufweist, was nicht nur für solche aus biegsamem Kunsstoff sondern auch für nicht allzu dicke gläserne gilt, legt er sich und mit ihm der aufgeklebte Dünnschliff nach der Abnahme vom Aufnahmekopf glatt auf jede ebene Unterlage, z.B. den Koordinatentisch eines Mikroskops, auf und die Oberfläche des Dünnschliffes ist an allen Stellen genau parallel zur Unt lage.

Sollten aber Ober- und Unterseite des zur Verfügung stehenden Objektträgers nicht genau planparallel sein, dann kann er erfindungsgemäß vor dem Aufkleben des Probematerials auf dem bereits geschliffenen Aufnahmekopf in gleicher Weise geschliffen werden.

Die praktische Durchführung dieser Maßnahme erfolgt zweckmäßig in der Weise, daß vor der Anfertigung einer größeren Anzahl von Dünnschliffen erst alle benötigten Objektträger geschliffen, anschließend mit den zu bearbeitenden Proben beklebt und schließlich zu Dünnschliffen verarbeitet werden.

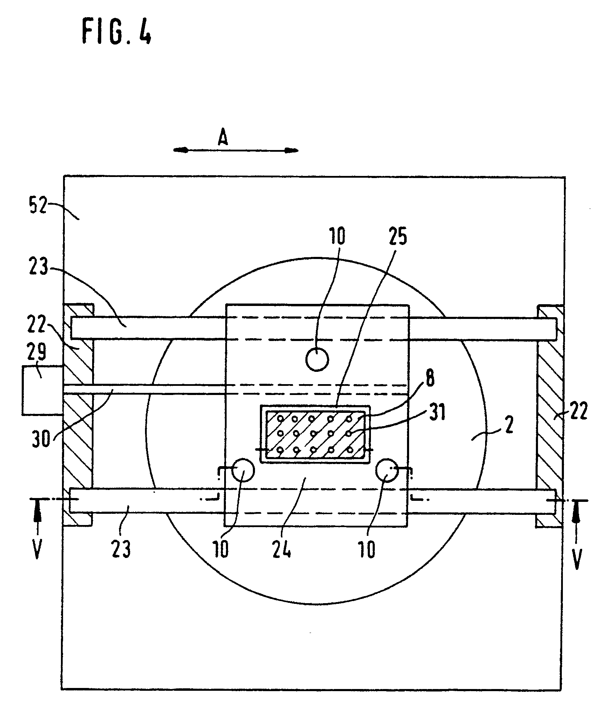

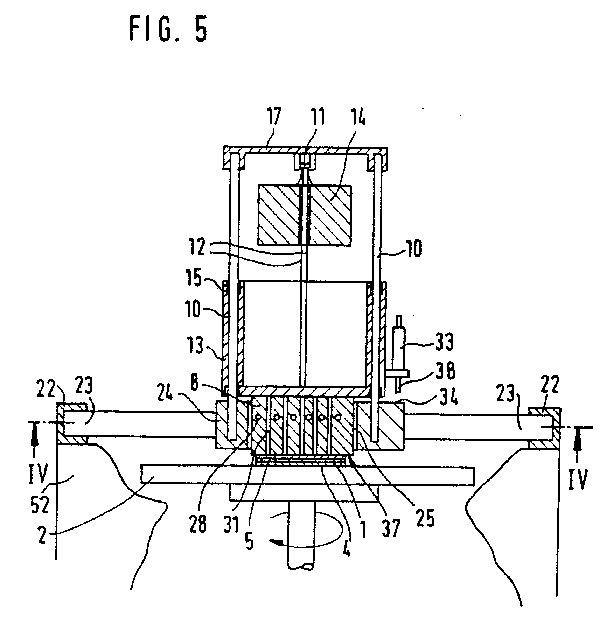

Eine für die Durchführung des erfindungsgemäßen Verfahrens geeignete Vorrichtung ist nachstehend an Hand der Figuren 4 und 5 näher erläutert,in denen auch mehrere bevorzugte Ausführungsformen verkörpert sind.

Die Figuren 1 und 2 sind senkrechte Schnitte längs der Linie I - I der Figur 3 in zwei aufeinander folgenden Verfahrensstufen und Figur 3 ist eine Ansicht der Figur 2 von unten.

Figur 4 ist die Ansicht eines Horizontalschnittes längs der Linie IV - IV der Figur 5 von unten.

Figur 5 ist die Ansicht eines Vertikalschnittes der Figur 4 längs der Linie V - V von vorne.

Figur 6 ist eine Ansicht der auf dem ersten Objektträger (5a) geklebten Probe.

Figur 7 ist eine Ansicht der Probe nach dem ersten Schnitt (101) mit dem zweiten Objektträger darauf geklebt.

Nach Figur 1 wird in die Aufnahmenut 7 des Aufnahmeblocks 8 ein genau passendes Metallplättchen 9 und darauf der ebenfalls genau passende Objektträger 5 eingelegt. Um die Gefahr des Wackelns von Objektträger und/oder Metallplättchen während des Schleifens zu verringern, wird deren Adhäsion aneinander und am Aufnahmeblock durch Zugabe einiger Tropfen Wasser oder Öl erhöht. Die Dicke des Metallplättchens ist so gewählt, daß sie der Summe der Dicken der Kleberschicht 4 und der gewünschten Enddicke der Probe 1 entspricht. Der so bestückte Aufnahmeblock wird auf die mit Schleifmaterial, üblicherweise sehr feinem Schleifpapier belegte Schleifscheibe 2 aufgelegt und der Objektträger bis auf die Höhe der Unterkante k der seitlich der Nut 7 und parallel zu dieser angeordneten Hartmaterialkanten 6 (deren Funktion der der Auflagen 16 der CH - A - 629 992 entspricht) abgeschliffen. Dabei sichert meist eine Halterung 3 den Aufnahmeblock davor, durch die Zentrifugalkraft herunter geschleudert zu werden. Auch kann dabei der Aufnahmeblock um seine eigene Achse gedreht und/oder mit zusätzlichen Gewichten belastet werden. Dadurch wird die ursprünglicbe Dicke o des Objektträgers auf o' reduziert.

Ein einige Millimeter dicker Block aus dem in Kunststoff eingebetteten Probematerial wird in Höhe des interessierenden Teiles der Probe aufgeschnitten, gegebenenfalls poliert, mit einem Tropfen eines dünnflüssigen Klebers mit der Schnittseite auf dem vorher abgeschliffenen Objektträger festgeklebt und mit einem Sägeschnitt im Abstand von etwa 50 bis 200 $\mu$m vom Objektträger beschnitten. Der so präparierte Objektträger wird dann wieder in die Aufnahmenut 7 eingelegt, aus der zuvor das Metallplättchen 9 entfernt worden ist (vgl. Fig. 2), worauf die Probe wieder bis auf die Höhe der Unterkanten der Hartmaterialleisten abgeschliffen wird. Dadurch wird die Dicke der Probe bis auf die Dicke des eingelegt gewesen Metall-

plättchensabzüglich der Dicke der Kleberschicht 4 reduziert.

Die Schleifscheibe 2 ist zusammen mit ihrem (nicht dargestellten) Antrieb in einem Gehäuse 52 untergebracht, von dem nur ein Teil der Oberkante dargestellt ist. Zwei horizontale Lager 22 liegen auf ihr auf und können gegebenenfalls mit ihr fest verbunden sein. In den Lagern 22 sind zwei horizontale Führungsschienen 23 gelagert, auf denen der Führungsschlitten 24 verschiebbar ist. Er wird beim Betrieb von einem Motor 29 mittels einer durch eines der beiden Lager 22 hindurchreichenden Antriebsstange 30 in oszillierende Bewegung im Sinne des Pfeiles A versetzt, deren Geschwindigkeit vorzugsweise einstellbar ist.

Der Führungsschlitten 24 hat eine zentrale Öffnung 25, die groß genug ist, um den für die Aufnahme des Objektträgers 5 bestimmten Aufnahmeblock 8 aufnehmen zu können. Mit dem Führungsschlitten 24 fest verbunden sind senkrechte Führungsschienen 10, auf denen der Hubschlitten 13 an Lagern 15 auf und ab beweglich ist.

Die oberen Enden der Führungsschienen 10 sind durch eine Kappe 17 miteinander verbunden, die eine Verbiegung der Führungsschienen 10 relativ zeueinander weitgehend verhindert. An der Verbindungskappe 17 sind Rollen 11 gelagert, über welche Seile 12 laufen, an denen das Gegengewicht 14 hängt. Dieses ist so bemessen, daß es das Gewicht des Hubschlittens 13 einschließlich aller mit ihm verbundenen Zusatzeinrichtungen wie Anfnahmeblock 8, Wasser- und Vakuumleitungen u. dgl. mindestens weitgehend und vorzugsweise genau kompensiert. Am Hubschlitten 13 sind auch (nicht dargestellte) Vorrichtungen zum Anbringen zusätzlicher kleiner Tariergewichte vorhanden, mit denen der wirksame Schleifdruck auf jeden gewünschten Wert genau eingestellt werden kann und die zweckmäßig nach dem Gewichtssatzsystem (1,2,2,5,10,20,20,50...) aufgebaut sind.

Der Aufnahmeblock 8 ist von einem System von Vakuumleitungen 31 durchzogen, die einerseits über mindestens einen Anschluß an eine im Hubschlitten 13 vorhandene Vakuumleitung mit einem absperrbaren Vakuumanschluß und andererseits mit der Aufnahmefläche 37 für den Objektträger 5 in Verbindung stehen, welche bei Einschaltung des Vakuums den die Probe tragenden Objektträger 5 festhalten.

Außerdem hat der Hubschlitten 13 einen ebenfalls absperrbaren Wasseranschluß, der über nicht dargestellte Leitungen in die Aufnahmeöffnung des Aufnahmeblocks 8 mündet, aus der das Wasser zu den Wasseraustrittsöffnungen 28 gelangt und ungehindert von Hartmaterialkanten die Probe von allen Seiten umspülen kann.

Am Hubschlitten 13 ist eine Mikrometerschraube 33 befestigt, unterhalb derer auf dem Führungsschlitten 24 ein elektrischer Kontakt 34 angeordnet ist, der bei Berührung durch den Fühler 38 der Mikrometerschraube 33 den Antrieb der Schleifscheibe 2 abstellt und/oder die weitere Abwärtsbewegung des Hubschlittens 13 blockiert. Vorzugsweise wird gleichzeitig auch der Antrieb des Führungsschlittens 24 abgestellt.

Die Einstellung auf die gewünschte Enddicke der Probe kann durch Einstellung des Abstandes zwischen dem Fühler 38 der Mikrometerschraube 33 und ihrem ortsfesten Gegenkontakt 34 vorgegeben werden, wodurch gewährleistet ist, daß ohne wiederholte Unterbrechung der Schleifoperation und Nachprüfung der erreichten Probendicke die Probe in einem einzigen Arbeitsgang auf die gewünschte und eingestellte Enddicke abgeschliffen wird.

Die geschilderten Maßnahmen zur Herstellung eines Dünnschliffes mit gegenüber dem Stand der Technik erheblich verbesserten Eigenschaften können gemäß einer weiteren Ausgestaltung der Erfindung einzeln oder in beliebiger Kombination miteinander zur Erzielung einer weiteren Verbesserung des Endproduktes eingesetzt werden. Diese zusätzliche Verbesserung besteht darin, daß auch die auf dem Objektträger aufgeklebte Unterseite des Präparates die gleiche hohe Qualität hat wie seine freiliegende Oberfläche, also ideal eben und außerdem genau parallel zu den Oberflächen des Objektträgers ist. Dadurch ist die Gewähr gegeben, daß die Kleberschicht an allen Stellen der Probe stets genau die gleiche Dicke hat.

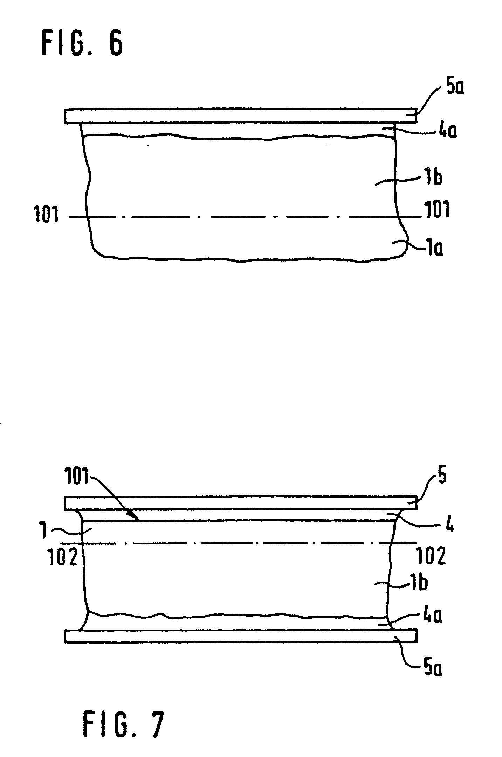

Zu diesem Zweck wird gemäß der nachstehend an Hand der Figuren 6 und 7 beispielsweise erläuterten bevorzugten Ausführungsform der Erfindung zunächst von der Unterseite der - zweckmäßig mit der Kleberschicht 4a auf einem Objektträger 5a aufgeklebten - in Kunststoff eingebetteten Ausgangsprobe 1a durch einen Schnitt, vorzugsweise einen Sägeschnitt 101, ein Teil abgetrennt. Die frei gelegte Schnittfläche 101 des so hergestellten Zwischenproduktes 1b, dessen Dicke kleiner ist als die der Ausgangsprobe 1a aber größer als die gewünschte Dicke des zum Sägen und Schleifen bestimmten Vorproduktes ( z.B. 1 bis 5 mm) wird hierauf präzise poliert, wozu alle oben geschilderten bekannten und erfindungsgemäßen Maßnahmen Verwendung finden können.

Auf die polierte Oberfläche 101 wird - vgl. Fig. 7 - ein Tropfen Kleber 4 aufgetragen und auf diesen ein zweiter Objektträger 5 mit, gegebenenfalls durch Nachschleifen erzeugter , konstanter Dicke parallel zur Fläche 101 aufgepreßt. Dadurch wird der Kleber 4 zu einer Schicht völlig gleichmäßiger Dicke zusammengepreßt, die genau parallel zum Objektträger und zur künftigen Unterseite 101 der Probe 1 ausgerichtet ist.

Hierauf wird durch einen zweiten Schnitt 102, der zweckmäßig in einem Abstand von etwa 50 bis 200 μm vom Objektträger 5 gelegt wird, der Objektträger 5a zusammen mit einem Teil des Zwischenproduktes 1b abgetrennt. Anschließend wird die Dicke des verbleibenden Vorproduktes 1 durch Abschleifen der Schnittfläche 102 in der oben grschilderten Weise auf die gewünschte Enddicke von z.B. 5 - 12 μm reduziert.

**Patentansprüche**

1. Verfahren zur Herstellung von für die mikroskopische Untersuchung im Durchlicht geeigneten Proben durch Abschleifen einer in Kunststoff eingebetteten, über 50 μm dicken Probe, die aus Substanzen mit harten Einlagen in einer weicheren Matrix wie Metall- oder Keramikimplantaten besteht und die auf einem Objektträger (5) aufgeklebt sind, welcher auf einem Aufnahmekopf (8) hängt, mittels einer unterhalb der Probe rotierenden Schleifscheibe (2) unter Kühlung und Spülung mit einer Flüssigkeit wie Wasser, dadurch gekennzeichnet, daß der den Objektträger (5) mit der Probe (1) tragende Aufnahmekopf (8) an einem Hubschlitten (13) befestigt ist, der während des Schleifvorganges an senkrechten Führungsschienen (10) zwangsgeführt unter dem Einfluß der Schwerkraft abwärts gleitet und mit einem Meßgerät (33) verbunden ist, das den Vertikalabstand eines mit seinem Fühler (38) fest verbundenen Punktes von einem oberhalb der Schleifscheibe (2) angeordneten Meßpunkt (34) mißt und beim Erreichen eines bestimmten einstellbaren Wertes dieses Abstandes den Antrieb der Schleifscheibe (2) abstellt und/oder die weitere Abwärtsbewegung des Hubschlittens (13) blockiert.

2. Verfahren nach Anspruch 1, dadurch gekennzeichnet, daß das Gewicht des den Aufnahmekopf (8) tragenden Hubschlittens (13) einschließlich aller mit ihm verbundenen Zusatzeinrichtungen und der Probe (1) mit dem sie tragenden Objektträger durch Gegengewichte mindestens teilweise und vorzugsweise genau kompensiert wird.

3. Verfahren nach den Ansprüchen 1 und 2, dadurch gekennzeichnet, daß der Hubschlitten (13) mit dem Aufnahmeblock (8) und dem die Probe (1) tragenden Objektträger (5) während des Schleifvorganges zwangsgeführt an horizontalen Schienen (23) oszillierend über die Oberfläche der Schleifscheibe (2) hin und hergezogen wird, ohne jedoch den Rand der Schleifscheibe (2) zu überschreiten.

4. Verfahren nach den Ansprüchen 1 bis 3, dadurch gekennzeichnet, daß durch eine vorzugsweise auf einem ersten Objektträger (5a) aufgeklebte Ausgangsprobe (1a) ein Schnitt (101) parallel zum Objektträger (5a) geführt, die Schnittfläche des so hergestellten Zwischenproduktes nach einem der Ansprüche 1 bis 3 poliert, auf die polierte Fläche Kleber (4) aufgetragen und auf diesen ein zweiter Objektträger aufgedrückt und nach Aushärtung des Klebers (4) durch einen zweiten parallel zum ersten Schnitt (101) und zum zweiten Objektträger (5) geführten Schnitt (102) die Dicke des an dem zweiten Objektträger (5) verbleibenden Teiles (1b) des Zwischenproduktes durch Abschleifen und Polieren der Schnittfläche (102) nach einem der Ansprüche 1 bis 3 auf den für das Fertigprodukt gewünschten Wert von vorzugsweise 5 bis 13 μm reduziert wird.

5. Verfahren nach den Ansprüchen 1 bis 4, dadurch gekennzeichnet, daß der Aufnahmeblock (8) vor Intriebnahme ohne aufgesetzten Objektträger (5) abgeschliffen wird.

6. Verfahren nach den Ansprüchen 1 bis 5, dadurch gekennzeichnet, daß auf dem abgeschliffenen Aufnahmeblock (8) der zu verwendende Objektträger (5) ebenfalls abgeschliffen wird.

7. Vorrichtung zur Durchführung des Verfahrens nach den Ansprüchen 1 bis 6, mit einem Objektträger (5), welcher an einem Aufnahmekopf (8) hängt, mit einer unterhalb der Probe drehbaren Schleifscheibe (2) und mit Mitteln zum Kühlen und Spülen mit einer Flüssigkeit, dadurch gekennzeichnet, daß der Aufnahmekopf (8) in seiner dem Objektträger zugewandten Aufnahmefläche mindestens eine mit einem Vakuumanschluß verbundene Öffnung (31) aufweist, daß der Aufnahmekopf (8) auf einem auf vertikalen Führungsschienen (10) unter Einwirkung der Schwerkraft verschieblichen Hubschlitten (13) angeordnet ist, daß am Hubschlitten (13) ein Meßgerät (33) befestigt ist, welches den Vertikalbastand seines Fühlers (38) von einem an der Vorrichtung ausgebildeten Meßpunkt (34) mißt und daß die Führungsschienen (10) an einem an horizontalen Führungsscheinen (23) verschiebbaren Führungsschlitten (24) befestigt sind.

8. Vorrichtung nach Anspruch 7, dadurch gekennzeichnet, daß der vorzugsweise ortsfeste Meßpunkt (34) für den auf dem Schlitten (13) montierten Fühler (38) des Meßgerätes (33) als Gegenkontakt für diesen ausgebildet ist, der bei der Berührung durch den Fühler (38) des Meßgerätes (33) den Antrieb der Schleifscheibe (2) ausschaltet und/oder die Abwärtsbewegung des Hubschlittens (13) stoppt.

9. Vorrichtung nach den Ansprüchen 7 und 8, gekennzeichnet durch mindestens ein Gegengewicht (14), das das Gewicht des Hubschlittens (13) einschließlich aller mit ihm verbundenen Zusatzeinrichtungen und des Objektträgers (5) samt der Probe mindestens teilweise und vorzugsweise genau kompensiert.

10. Vorrichtung nach Anspruch 9, gekennzeichnet durch Vorrichtungen zum Anbringen zusätzlicher Tariergewichte am Hubschlitten (13).

11. Vorrichtung nach den Ansprüchen 7 bis 10, gekennzeichnet durch einen an horizontalen Führungsschienen (23) oberhalb der Schleifscheibe (2) verschieblichen Führungsschlitten (24) mit einer zentralen Öffnung (25) für die Aufnahme des Hubschlittens (13), auf dem die vertikalen Führungsschienen (10) des Hubschlittens (13) befestigt sind und mit einem Antrieb (29), der ihn in oszillierende Bewegung über die Oberfläche der Schleifscheibe (2) versetzt, aber nicht über den Rand der Schleifscheibe (2) hinausführt.

12. Vorrichtung nach den Ansprüchen 7 bis 11, dadurch gekennzeichnet, daß der Aufnahmeblock (8) Vakuumleitungen enthält, die einerseits über mindestens eine im Hubschlitten (13) vorhandene Vakuumleitung mit einem absperrbaren Vakuumanschluß und andererseits mit der Aufnahmefläche (37) für den Objektträger (5) in Verbindung stehen.

13. Vorrichtung nach den Ansprüchen 7 bis 12, gekennzeichnet durch Verbindungsleitungen im Hubschlitten (13) und dem Aufnahmeblock (8) zwischen einem absperrbaren Wasseranschluß (28) am Hubschlitten (13) und Wasseraustrittsöffnungen im Aufnahmeblock (8).

14. Vorrichtung nach den Ansprüchen 7 bis 13, gekennzeichnet durch ein die oberen Enden der Führungsschienen (10) des Hubschlittens (13) miteinander verbindendes Verbindungsstück (17), an dem Rollen (11) gelagert sind, über welche die das Gegengewicht (14) tragenden Seile (12) laufen.

## Claims

1. Method for the production of samples suitable for microscopic examination by transmitted light by grinding down a sample more than 50 μm thick which is embedded in plastic material and which is made of substances with hard inclusions in a softer matrix such as metal or ceramic implants and which are glued to a microscope slide (5) which is suspended from a mounting head (8), by means of a grinding wheel (2) which rotates beneath the sample, with cooling and rinsing with a liquid such as water, characterised in that the mounting head (8) supporting the slide (5) with the sample (1) is attached to a vertical-travel carriage (13) which during the grinding operation slides downwards, guided constrainedly on vertical guide rails (10), under the influence of gravity and is connected to a measuring apparatus (33) which measures the vertical distance between a point connected fast to its sensor (38) and a measurement point (34) located above the grinding wheel (2) and, when a given adjustable value of this distance is reached, shuts off the drive of the grinding wheel (2) and/or blocks the further downward movement of the vertical-travel carriage (13).

2. Method according to Claim 1, characterised in that the weight of the vertical-travel carriage (13) supporting the mounting head (8), including all the additional means connected thereto, and of the sample (1) with the slide bearing it is at least partially and preferably exactly compensated by counterweights.

3. Method according to Claims 1 and 2, characterised in that the vertical-travel carriage (13) with the mounting block (8) and the slide (5) bearing the sample (1) during the grinding operation are pulled back and forth in oscillating manner across the surface of the grinding wheel (2), guided constrainedly on horizontal rails (23), but without going beyond the edge of the grinding wheel (2).

4. Method according to Claims 1 to 3, characterised in that a cut (101) is made parallel to the slide (5a) through an initial sample (1a) preferably glued to a first slide (5a), the cut face of the intermediate product thus produced is polished in accordance with one of Claims 1 to 3, adhesive (4) is applied to the polished face and a second slide is pressed onto the adhesive and, after the hardening of the adhesive (4), through a second cut (102) made parallel to the first cut (101) and to the second slide (5) the thickness of the piece (1b) of the intermediate product remaining on the second slide (5) is reduced to the value of preferably 5 to 13 μm which is desired for the finished product by grinding and polishing the cut face (102) in accordance with one of Claims 1 to 3.

5. Method according to Claims 1 to 4, characterised in that the mounting block (8) is ground without the slide (5) being placed on top, before being brought into operation.

6. Method according to Claims 1 to 5, characterised in that the slide (5) which is to be used is likewise ground down on the mounting block (8) which has been ground.

7. Apparatus for carrying out the method according to Claims 1 to 6, with a slide (5) which is suspended from a mounting head (8), with a grinding wheel (2) which can be rotated beneath the sample and with means for cooling and rinsing with a liquid, characterised in that the mounting head (8) in its mounting face facing the slide has at least one opening (31) which is connected to a vacuum coupling, that the mounting head (8) is located on a vertical-travel carriage (13) which is displaceable on vertical guide rails (10) under the action of gravity, that a measuring apparatus (33) which measures the vertical distance of its sensor (38) from a measurement point (34) formed on the apparatus is attached to the vertical-travel carriage (13) and that the guide rails (10) are attached to a guide carriage (24) which is displaceable on horizontal guide rails (23).

8. Apparatus according to Claim 7, characterised in that the preferably stationary measurement point (34) for the sensor (38) of the measuring apparatus (33) which is mounted on the carriage (13) is designed as an opposite contact therefor which upon contact by the sensor (38) of the measuring apparatus (33) shuts off the drive of the grinding wheel (2) and/or stops the downward movement of the vertical-travel carriage (13).

9. Apparatus according to Claims 7 and 8, characterised by at least one counterweight (14) which at least partly and preferably exactly compensates for the weight of the vertical-travel carriage (13) including all the additional means connected thereto and of the slide (5) including the sample.

10. Apparatus according to Claim 9, characterised by means for the attachment of additional taring weights on the vertical-travel carriage (13).

11. Apparatus according to Claims 7 to 10, characterised by a guide carriage (24) which is displaceable on horizontal guide rails (23) above the grinding wheel (2) and has a central opening (25) for receiving the vertical-travel carriage (13), to which guide carriage the vertical guide rails (10) of the vertical-travel carriage (13) are attached, and with a drive (29) which gives it an oscillating movement over the surface of the grinding wheel (2) but does not take it beyond the edge of the grinding wheel (2).

12. Apparatus according to Claims 7 to 11, characterised in that the mounting block (8) contains vacuum conduits which communicate on one hand via at least one vacuum conduit present in the vertical-travel carriage (13) with a closable vacuum coupling and on the other hand with the mounting face (37) for the slide (5).

13. Apparatus according to Claims 7 to 12, characterised by communicating conduits in the vertical-travel carriage (13) and the mounting block (8) between a closable water coupling (28) on the vertical-travel carriage (13) and water outlet openings in the mounting block (8).

14. Apparatus according to Claims 7 to 13, characterised by a connecting element (17) which joins together the upper ends of the guide rails (10) of the vertical-travel carriage (13), on which element rollers (11) are mounted over which the cables (12) supporting the counterweight (14) run.

## Revendications

1. Procédé pour la préparation des échantillons aptes à la microscopie à l'éclairage par transparence réalisé par rodage d'un échantillon de plus de 50 μm d'épaisseur, encastré dans la matière plastique, ledit échantillon étant composé de substances dures dans une matrice molle comme des implantations métalliques ou céramiques, ledit échantillon étant collé sur un porte-objet (5) qui est suspendu à un tasseau (8), à l'aide d'une meule (2) tournante au dessous de l'échantillon sous refroidissement et rinçage avec un liquide comme de l'eau, caractérisé par le fait que le tasseau (8) portant le porte-objet (5) avec l'échantillon (1) est fixé à une glissière de levage (13) qui pendant le rodage est forcée de glisser verticalement sous l'action de la gravitation dans des glissières (10) et qui est jointe à un instrument de mesure (33) qui mesure la distance verticale entre le point fixé avec le doigt (38) et le point de mesure (34) situé au dessus de la meule (2) et qui en atteignant une valeur ajustable déterminée de cette distance arrête la commande de la meule (2) et / ou bloque le mouvement vers le bas de la glissière de levage (13).

2. Procédé selon revendication 1, caractérisé par le fait que le poids de la glissière de levage (13) portant le tasseau (8) avec tous les dispositifs additionnels et l'échantillon (1) ainsi que le porte-objet est équilibré par des contrepoids au moins partiellement et de préférence exactement.

3. Procédé selon les revendications 1 et 2, caractérisé par le fait que la glissière de levage (13) avec le tasseau (8) et le porte-objet (5) portant l'échantillon (1) pendant le rodage est forcé d'osciller le long des glissières (23) horizontales sur la surface de la meule (2), sans cependant dépasser le bord de le meule (2).

4. Procédé selon les revendications 1 à 3, caractérisé par le fait qu'à travers un échantillon original (1a) collé de préférence à un premier porte-objet (5a) une coupe est faite (101), parallèlement au porte-objet (5a), la surface de la coupe du produit intermédiaire ainsi préparé est polie selon une des revendications 1 à 3, de la colle (4) est appliquée sur la surface polie, là-dessus est posé un deuxième porte-objet, et après durcissement de la colle (4) et après une deuxième coupe (102) faite parallèlement à la première coupe (101) et au deuxième porte-objet (5), l'épaisseur de la partie du produit intermédiaire (1b) resté au deuxième porte-objet (5) est réduite par rodage et polissage de la coupe (102) selon une des revendications 1 à 3 jusqu'à une valeur de 5 - 13 $\mu$m désirée de préférence pour le produit final.

5. Procédé selon les revendications 1 à 4, caractérisé par le fait que le tasseau (8) sans porte-objet (5) est rodé avant la mise en marche.

6. Procédé selon les revendications 1 à 5, caractérisé par le fait que le porte-objet (5) appliqué au tasseau (8) rodé est rodé également.

7. Dispositif pour la réalisation du procédé selon les revendications 1 à 6, avec un porte-objet (5) fixé à un tasseau (8) avec une meule (2) tournante au dessous de l'échantillon sous refroidissement et rinçage avec un liquide, caractérisé par le fait que le tasseau (8) est muni au moins d'alésage (31) avec une jonction à vide débouchant sur la surface qui touche le porte-objet, que le tasseau (8) est fixé à une glissière de levage (13 glissant sous l'action de la gravitation dans des glissières verticales (10) et qu'un instrument de mesure (33) est fixé à la glissière de levage (13) qui mesure la distance verticale entre son doigt (38) et un point de mesure (34) fixe et que les glissières (10) sont fixées à un glisseur (24) glissant dans des glissières horizontales (23).

8. Dispositif selon revendication 7, caractérisé par le fait que le point de mesure (34) de préférence fixe fonctionne pour le doigt (38) de l'instrument de mesure (33) monté sur la glissière de levage (13) comme contre-contact qui touchant le doigt (38) de l'instrument de mesure (33) coupe la commande de la meule (2) et / ou arrête le mouvement vers le bas de la glissière de levage (13).

9. Dispositif selon les revendications 7 et 8, caractérisé par le fait que le poids de la glissière de levage (13) inclusivement tous les dispositifs additionnels ainsi que le porte-objet (5) avec l'échantillon est compensé au moins partiellement et de préférence précisément par au moins un contrepoids (14).

10. Dispositif selon revendication 9 caractérisé par le fait que la glissière de levage (13) porte des mécanismes pour fixer des poids additionnels à tarer.

11. Procédé selon les revendications 7 à 10, caractérisé par un glisseur (24) glissant le long des glissières horizontales (23) au dessus de la meule (2), ledit glisseur étant muni d'une ouverture (25) centrale pour installer la glissière de levage (13) sur laquelle sont fixées les glissières verticales (10) de la glissière de levage (13), ledit glisseur étant muni d'une commande (29) qui lui donne un mouvement oscillant sur la surface de la meule (2) sans cependant dépasser le bord de la meule (2).

12. Dispositif selon les revendications 7 à 11, caractérisé par le fait que le tasseau (8) contient des tuyaux à vide qui sont branchés d'un côté par au moins un tuyau à vide localisé à l'intérieur de la glissière de levage (13) à une jonction à vide avec un robinet de retenue et de l'autre côté à la surface (37) prévue pour le porte-objet (5).

13. Dispositif selon les revendications 7 à 12, caractérisé par le fait qu'il y a des conduites à l'intérieur de la glissière de levage (13) et du tasseau (8) entre une prise d'eau (28) avec un robinet de retenue à la glissière de levage (13) et les orifices d'eau dans le tasseau (8).

**14.** Dispositif selon les revendications 7 à 13, caractérisé par le fait qu'un raccord (17) unissant les bouts supérieurs des glissières (10) de la glissière de levage (13) porte des rouleaux (11) sur lesquels sont conduites les cordes (12) portant le contrepoids (14).

FIG. 1

0    0'

3

8

k   9   5   7   6   2

FIG. 2

8

k   5   4   1   6

1

6

5

FIG. 3

8

EP 0 209 764 B1

# FIG. 4

12

# FIG. 5

FIG. 6

FIG. 7